# EUROPÄISCHE PATENTSCHRIFT

(11) **EP 2 965 960 B1**
(45) Veröffentlichungstag und Bekanntmachung des Hinweises auf die Patenterteilung: **23.11.2016**
(21) Anmeldenummer: 15001977.6
(22) Anmeldetag: 02.07.2015
(51) Int. Cl.: B60T 13/08, B60T 7/10, B60T 7/20

(54) **FESTSTELLBREMSE**
PARKING BRAKE
FREIN DE STATIONNEMENT

(30) Priorität: 08.07.2014 DE 202014005555 U
(43) Veröffentlichungstag der Anmeldung: 13.01.2016
(73) Patentinhaber: Knott GmbH, D-83125 Eggstätt (DE)
(72) Erfinder: Strasser, Josef, 83257 Gstadt am Chiemsee (DE)
(74) Vertreter: Bauer, Friedrich

(56) Entgegenhaltungen:
- EP-A2- 0 857 632
- DE-A1- 4 228 381
- DE-U1- 8 805 106
- DE-U1- 8 900 950
- DE-U1-202012 009 953

## Beschreibung

Die Erfindung betrifft eine Feststellbremse für Fahrzeuganhänger gemäß dem Oberbegriff des Anspruches 1.

Feststellbremsen für Fahrzeuganhänger müssen aufgrund gesetzlicher Vorschriften auf mechanische Weise wirken. Dies gilt auch bei elektrischen Bremsanlagen, bei denen die Betriebsbremse mittels elektronischer Steuerungseinrichtungen überwacht und mittels elektromechanischer Komponenten ausgelöst wird.

Bei elektrischen Bremsanlagen müssen Sicherungseinrichtungen vorgesehen sein, die bei einem Ausfall der elektrischen Energieversorgung oder bei einem Absinken des Ladezustands des am Fahrzeuganhänger vorgesehenen Akkumulators unter ein bestimmtes Niveau wirksam werden. Hierzu ist aus der DE 10 2012 016 648 B3 eine Feststellbremse bekannt, bei der ein Übersetzungshebel, der mit einem Bremsgestänge zusammenwirkt, auf elektromechanische Weise mittels eines Elektromotors in eine Stellung gezogen wird, in welcher die Bremse gelöst ist. Hierdurch wird ein Federspeicher gespannt. Bei Verlust der Energieversorgung gibt eine Verriegelungseinrichtung den Übersetzungshebel frei, so dass dieser durch die Federspeichereinrichtung in die Bremsstellung gedrückt werden kann.

Weiterhin ist aus der EP 2 163 446 B1 ein Bremssystem bekannt, bei dem ein elektrischer Antrieb, z.B. ein elektromechanischer Spindeltrieb mit Selbsthemmung, betätigt wird, um die Feststellbremse in die Bremsstellung zu bewegen. Dieses bekannte Bremssystem hat jedoch den Nachteil, dass elektrische Energie zum Lösen der Feststellbremse erforderlich ist. Dies ist nachteilig, wenn ein abgehängter Anhänger rangiert werden muss und nicht mehr genügend Energie zum Lösen der Feststellbremse zur Verfügung steht. Weiterhin ist dieses Bremssystem relativ teuer und wartungsanfällig.

Eine Feststellbremse gemäß dem Oberbegriff des Anspruchs 1 ist aus der-EP 0 857 602 A2 bekannt. Die Unterstützung der Schwenkbewegung des Handbremshebels erfolgt dort ausschließlich durch die Federkraft der Federspeichereinrichtung, beispielsweise einer Gasfeder. Weiterhin ist aus der DE 89 00 950 U1 eine automatische Feststellbremse für Kraftfahrzeuge bekannt, bei welcher der Handbremshebel mit Hilfe eines Getriebemotors über eine von diesem angetriebene Zahnstange oder über ein vom Getriebemotor betätigtes Zugseil zwischen der Löseposition und der Bremsposition bewegt wird.

Aus der DE 42 28 381 A1 ist eine Betätigungseinrichtung für eine Kraftfahrzeug-Feststellbremse bekannt, bei welcher der Handbremshebel über eine Kopplervorrichtung derart mit einem Elektromotor gekoppelt ist, dass die Feststellbremse bei Bedarf entweder rein manuell mittels des Handbremshebels oder rein elektromotorisch betätigt werden kann.

Nachteilig ist bei diesen bekannten elektromotorisch betätigten Feststellbremsen, dass sie einen relativ hohen Strombedarf haben. Werden die dortigen Elektromotore über eine Batterie gespeist und sinkt der Ladezustand der Batterie unter ein bestimmtes Niveau, kann die ordnungsgemäße elektromotorische Funktion der Feststellbremse nicht mehr sichergestellt werden.

Der Erfindung liegt daher die Aufgabe zugrunde, eine Feststellbremse mit einer automatischen Betätigung zu versehen, welche die Betätigung der Feststellbremse mit minimalem Strombedarf ermöglicht, einfach und kostengünstig herstellbar ist und auch eine manuelle Betätigung der Feststellbremse unabhängig von einer elektrischen Energiequelle ermöglicht.

Diese Aufgabe wird erfindungsgemäß durch eine elektromechanische Feststellbremse mit den Merkmalen des Anspruches 1 gelöst. Vorteilhafte Ausfühungsformen der Erfindung sind in den weiteren Ansprüchen beschrieben.

Die erfindungsgemäße Feststellbremse weist einen Handbremshebel, der am Fahrzeuganhänger schwenkbar lagerbar und um eine Schwenkachse schwenkbar ist, sowie eine Federspeichereinrichtung auf, welche ausgebildet ist, den Handbremshebel ab einer Totpunktstellung, in der die Kraftrichtung der Federspeichereinrichtung durch die Schwenkachse des Handbremshebels geht, entweder in eine Löseposition oder entgegengesetzt in eine Bremsposition zu schwenken. Weiterhin ist ein Elektromotor vorgesehen, der über ein Betätigungselement mit dem Handbremshebel in Wirkverbindung ist, derart, dass der Handbremshebel mittels des Elektromotors von seiner Löseposition über die Totpunktstellung hinaus lediglich bis in eine Schwenkposition schwenkbar ist, ab welcher die Federspeichereinrichtung den Handbremshebel weiter in seine Bremsposition drängt, wobei ab dieser Schwenkposition die weitere Bewegung des Handbremshebels in seine Bremsposition unabhängig vom Elektromotor durch die Federspeichereinrichtung erfolgt.

Durch die erfindungsgemäße Konfiguration wird einerseits der Energiebedarf reduziert, da der Elektromotor den Handbremshebel lediglich von der Lösestellung bis zur Totpunktstellung bzw. geringfügig darüber bewegen muss, wenn die Feststellbremse zugespannt werden soll. Ab der Totpunktstellung erfolgt die weitere Bewegung des Handbremshebels unabhängig vom Elektromotor durch die Federspeichereinrichtung, so dass hierzu keine elektrische Energie mehr benötigt wird. Anderseits ermöglicht die erfindungsgemäße Konfiguration auch, selbst bei leerem Energiespeicher die Feststellbremse beispielsweise zum Rangieren einfach durch manuelles Lösen des Handbremshebels zu betätigen.

Von besonderem Vorteil ist weiterhin, dass der Elektromotor mit dem Betätigungselement auf einfache Weise auch bei bestehenden Bremsanlagen nachgerüstet werden kann. Weiterhin kann die erfindungsgemäße Feststellbremse sowohl bei Auflaufbremsanlagen, bei denen auf ein bremsendes Zugfahrzeug hin ein teleskopartiges Zusammenschieben der Zugdeichsel bewirkt und dadurch ein Bremsvorgang an den Radbremsen des Fahrzeuganhängers eingeleitet wird, als auch bei Bremsanlagen mit starren Zugdeichseln eingesetzt werden.

Vorzugsweise ist das mit dem Elektromotor zusammenwirkende Betätigungselement in Nachbarschaft einer am unteren Ende des Handbremshebels angeordneten Querlasche des Handbremshebels angeordnet und mit dieser in Eingriff oder in Eingriff bringbar. Dies ist insbesondere dann vorteilhaft, wenn der Handbremshebel bereits eine derartige Querlasche aufweist, um mittels dieser Querlasche einen Übersetzungshebel zu betätigen, über den die Schwenkbewegung des Handbremshebels und - falls eine Auflaufbremse vorgesehen ist - auch die Schubbewegung einer in die Deichsel einschiebbaren Kupplungsstange auf das Bremsgestänge übertragen wird. Hierdurch ist eine besonders einfache, gegebenenfalls auch nachträgliche, Kopplung des Betätigungselementes und Elektromotors mit bestehenden Bremsanlagen möglich, wobei nur eine minimale Anzahl zusätzlicher Teile erforderlich ist.

Vorteilhafterweise ist der Elektromotor über ein Untersetzungsgetriebe mit dem Betätigungselement in Wirkverbindung. Hierdurch ist es möglich, kleine, kostengünstige Elektromotoren zu verwenden, die einen minimalen Strombedarf haben.

Gemäß einer vorteilhaften Ausführungsform ist das Betätigungselement ein Nockenelement mit einer exzentrisch oder evolventenartig ausgebildeten Außenumfangsfläche. Besonders bevorzugt ist es dabei, wenn das Nockenelement mittels des Elektromotors um 360° drehbar und derart ausgebildet ist, dass eine 360°-Drehung des Nockenelements die Schwenkbewegung des Handbremshebels von seiner Löseposition über die Totpunktstellung hinaus in die Schwenkposition bewirkt, in welcher die Federspeichereinrichtung den Handbremshebel weiter in seine Bremsposition drängt. Hierdurch ist es möglich, das Nockenelement eine gesamte 360°-Drehung ausführen zu lassen, um den Handbremshebel über den relativ geringen Schwenkweg zu verschwenken, der von der Löseposition bis zur Totpunktposition bzw. etwas darüber hinaus erforderlich ist. Hierdurch wird ebenfalls eine Weguntersetzung geschaffen, welche die zum Schwenken des Handbremshebels erforderliche Kraft und damit den Energiebedarf reduziert. Weiterhin ist hierdurch für den Elektromotor lediglich ein einziger Schaltkontakt erforderlich, über den der Elektromotor dann nach Beenden der 360°-Umdrehung des Nockenelements wieder abgeschaltet wird.

Vorteilhafterweise ist die Feststellbremse bei Detektion eines vorbestimmten Zustands eines Energiespeichers, insbesondere Akkumulators, mittels des Elektromotors betätigbar. Vorzugsweise ist dabei der vorbestimmte Zustand des Energiespeichers ein Zustand, in welchem der Ladezustand unter ein bestimmtes Niveau sinkt, wobei ein Warnsignal aktiviert und danach die Feststellbremse automatisch betätigt wird. Im Falle des Auftretens einer kritischen Situation, in welcher das Energieniveau des Energiespeichers absinkt, wird durch die Detektion sichergestellt, dass die Feststellbremse mittels der Restenergie betätigt werden kann, d.h. der Elektromotor mit ausreichend Energie versorgt wird, um das Nockenelement um 360° einmal zu drehen.

Im Folgenden wird die Erfindung anhand eines Ausführungsbeispiels unter Bezugnahme auf die Zeichnung detailliert erläutert. In der Zeichnung zeigen:
- Figur 1:: eine Seitenansicht eines vorderen Teils einer Deichsel für einen Fahrzeuganhänger, an welcher eine Feststellbremse gemäß einer Ausführungsform der Erfindung angeordnet ist;
- Figur 2:: eine Schnittansicht des in Fig. 1 dargestellten vorderen Teils der Deichsel;
- Figuren 3A und 3B:: eine räumliche bzw. seitliche Darstellung des Handbremshebels der Feststellbremse mit Betätigungselement in der Form eines Nockenelements;
- Figuren 4A und 4B:: jeweilige Ansichten eines Elektromotors mit Untersetzungsgetriebe und Nockenelement in Alleinstellung;
- Figuren 5A und 5B:: räumliche Darstellungen des vorderen Teils der Deichsel mit Elektromotor in eingebautem Zustand; und
- Figuren 6A bis 6D:: Längsschnitte des in Figur 1 dargestellten vorderen Teils der Deichsel während einer 360°-Umdrehung des Nockens in unterschiedlichen Drehstellungen des Nockenelements.

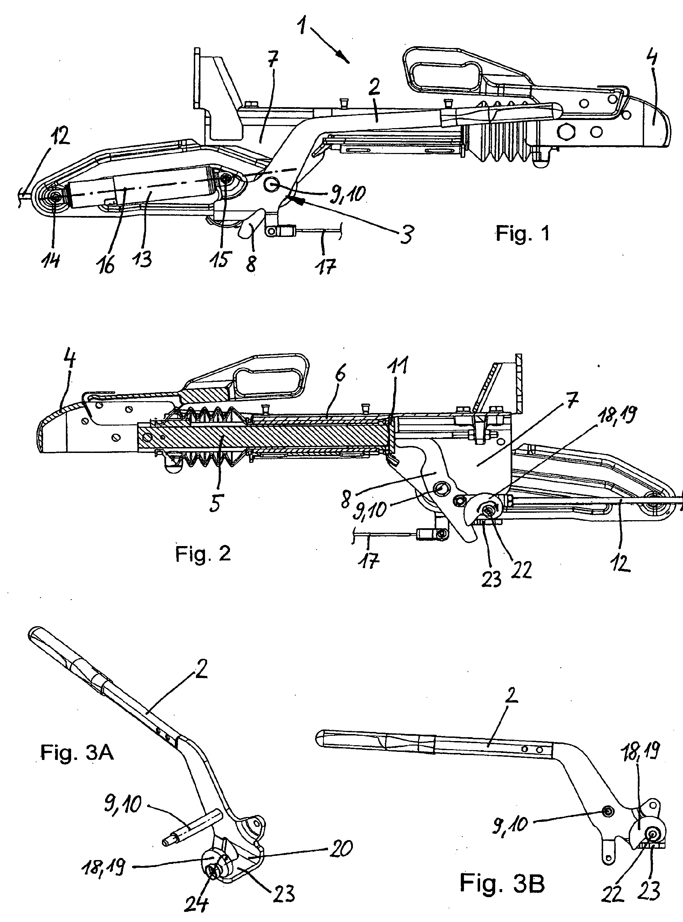

Fig. 1 zeigt eine Seitenansicht eines vorderen Teils einer Deichsel 1 für einen Fahrzeuganhänger (nicht dargestellt), betrachtet von der Seite des Handbremshebels 2 einer Feststellbremse 3 gemäß einer Ausführungsform der Erfindung. Der Handbremshebel 2 befindet sich in der hier dargestellten Ansicht in einer Ausgangsstellung, in welchem sich die Feststellbremse 3 in einem gelösten Zustand befindet. Wie hier erkennbar ist, weist die Deichsel 1 an ihrem vorderen - in der Zeichnung rechten - Ende eine Kugelkopfkalotte 4 auf, welche mit einem Kugelkopf eines Zugfahrzeugs (nicht dargestellt) gekuppelt werden kann. Die Kugelkopfkalotte 4 ist fest mit einer Kupplungsstange 5 verbunden, welche in einem Deichselrohr 6 längsverschiebbar gelagert ist (Fig. 2). Bremst das Zugfahrzeug, wird die Kupplungsstange 5 aufgrund der trägen Masse des Fahrzeuganhängers in das Deichselrohr 6 eingeschoben und ein Bremsvorgang ausgelöst, wie unten näher beschrieben wird.

Das Deichselrohr 6 ist an einer Haltekonsole 7 der Deichsel 1 befestigt. An der Haltekonsole 7 ist weiterhin ein Kraftübertragungselement in Form eines Übersetzungs- bzw. Schwenkhebels 8 mittels eines Schwenklagers 9 schwenkbar um die Schwenkachse 10 gelagert. Der in seinem oberen Bereich nach vorne gekrümmte Schwenkhebel 8 liegt mit seinem vorderen oberen Ende an einer Druckplatte 11 (siehe Fig. 2) der Kupplungsstange 5 an. Wird die Kupplungsstange 5 beim Bremsvorgang nach rechts verschoben (siehe Fig. 2), bewirkt diese Verschiebung ein Verschwenken des Schwenkhebels 8 im Uhrzeigersinn um die Schwenkachse 10 herum, wodurch ein unterhalb der Schwenkachse 10 angelenktes Bremsgestänge 12 nach vorne gezogen wird. Über dieses Bremsgestänge 12, welches ebenso alternativ ein Bremsseil sein kann, werden die hier nicht dargestellten Radbremsen des Fahrzeuganhängers im normalen Fahrbetrieb betätigt.

Der Schwenkhebel 8 wird nicht nur im Zusammenhang mit der Betriebsbremse verwendet, sondern wirkt auch mit einer unteren Querlasche 23 des Handbremshebels 2 der Feststellbremse 3 zusammen. Der Handbremshebel 2 ist ebenfalls über die Schwenkachse 10 an der Haltekonsole 7 schwenkbar gelagert.

Wie in Figur 1 erkennbar, ist auf der Seite des Handbremshebels 2 weiterhin eine Federspeichereinrichtung 13 vorgesehen. Die Federspeichereinrichtung 13 wirkt als Druckfeder, die mit ihrem hinteren Ende über das Schwenklager 14 an der Haltekonsole 7 und über das vordere Schwenklager 15 am Handbremshebel 2 abgestützt ist. In der Lösestellung verläuft eine Kraftlinie 16 durch die beiden Schwenklager 14, 15 oberhalb des Schwenklagers 10 des Handbremshebels 2. In der in Fig. 1 dargestellten Lösestellung wird der Handbremshebel 2 somit im Uhrzeigersinn vorgespannt, d. h. der Handbremshebel 2 wird in seiner Lösestellung gehalten. Soll die Feststellbremse manuell betätigt werden, so muss der Handbremshebel 2 zunächst entgegen der Vorspannkraft der Federspanneinrichtung 13 so weit hochgezogen werden, bis die Kraftlinie 16 durch die Schwenkachse 10 verläuft. Diese Schwenkstellung, in welcher die Federspeichereinrichtung 13 nun keine Schwenkraft mehr auf den Handbremshebel 2 ausübt, wird als Totpunktstellung bezeichnet. Wird der Handbremshebel 2 weiter nach oben gezogen, wandert die Kraftlinie 16 in den Bereich unterhalb des Schwenklagers 10. Die Vorspannkraft der Federspeichereinrichtung 13 kann damit wieder wirksam werden, drängt jedoch jetzt den Handbremshebel 2 in die umgekehrte Schwenkrichtung, d. h. in Figur 1 im Gegenuhrzeigersinn. Die Federspeichereinrichtung 13 bewegt damit den Handbremshebel 2 in seine endgültige Bremsstellung und hält die Feststellbremse so im Bremszustand, in welchem die Radbremse eine Bremswirkung ausübt.

In den Figuren 1 und 2 ist weiterhin erkennbar, dass unterhalb des Schwenklagers 10 am Handbremshebel 2 ein Abreißseil 17 angelenkt ist. Dieses Abreißseil 17 ist zum Kugelkopf des Zugfahrzeugs geführt und stellt ein Sicherheitselement dar, das im Falle eines unbeabsichtigten Lösens der Deichsel 1 von dem Zugfahrzeug ebenfalls die Radbremsen über den Handbremshebel 2 betätigt.

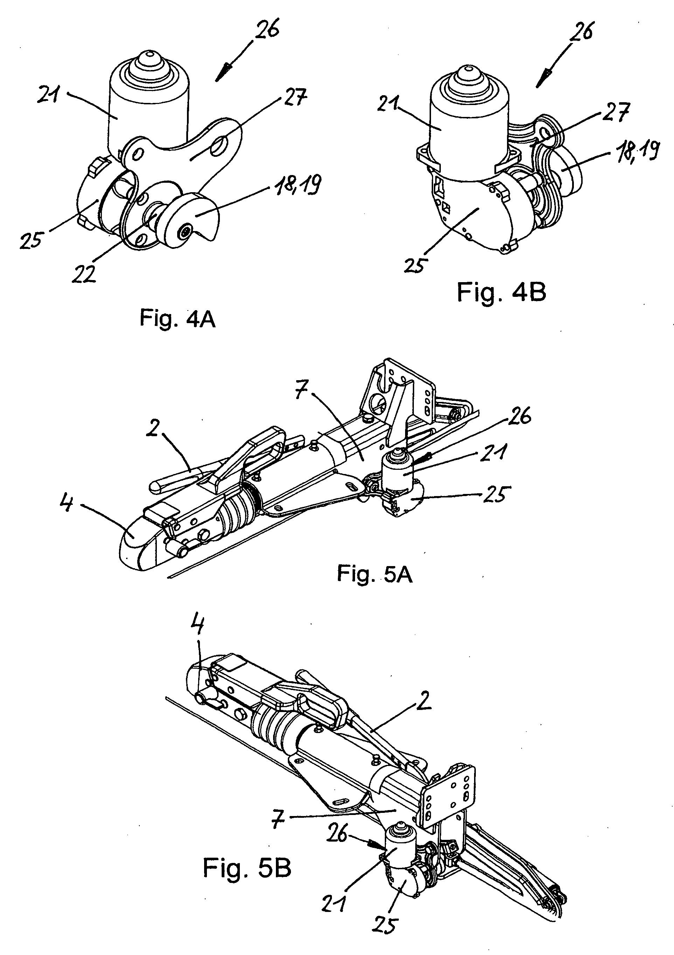

Fig. 2 zeigt einen Längsschnitt durch den in Fig. 1 dargestellten vorderen Teils einer Deichsel 1, hier jedoch von der gegenüberliegenden Seite aus betrachtet. Die in Fig. 1 und Fig. 2 dargestellte Feststellbremse 3 kann in einer Bremsanlage implementiert sein, welche in Verbindung mit einem elektrischen Bremssystem verwendet wird, bei welchem die Bremskraft des Fahrzeuganhängers mit Hilfe einer im Fahrzeuganhänger angeordneten elektronischen Rechenanlage geregelt wird. Um das elektrische Bremssystem mit Energie zu versorgen, ist auf dem Fahrzeuganhänger ebenfalls ein Energiespeicher, beispielsweise ein Akkumulator, angeordnet. Der Ladezustand des Energiespeichers wird kontinuierlich überwacht. Wird bei der Überwachung detektiert, dass der Ladezustand dieses Energiespeichers unter einen vorbestimmten Wert sinkt, wird vorzugsweise ein Warnsignal aktiviert und dann auch die Feststellbremse 3 automatisch mit der Reststrommenge des Energiespeichers betätigt. Diese automatische Betätigung erfolgt mittels einer motorisch betriebenen Handbremshebel-Hilfsschwenkeinrichtung 26, die in den Figuren 4A und 4B in Alleinstellung gezeigt ist.

Die Handbremshebel-Hilfsschwenkeinrichtung 26 umfasst einen Elektromotor 21, ein Untersetzungsgetriebe 25 und ein Betätigungselement 18, das im dargestellten Ausführungsbeispiel als Nockenelement 19 ausgebildet ist und mit der unteren Querlasche 23 des Handbremshebels 2 zusammenwirkt, wie aus den Figuren 3A und 3B ersichtlich.

Die Handbremshebel-Hilfsschwenkeinrichtung 26 ist mittels eines Flansches 27 an der Haltekonsole 7 der Deichsel 1 befestigbar, wobei zu diesem Zweck der Flansch 27 seitlich und von außen an der Haltekonsole 7 festgeschraubt wird. Elektromotor 21 und Untersetzungsgetriebe 25 befinden sich dabei, wie auch aus den Figuren 5A und 5B ersichtlich, seitlich außerhalb der Haltekonsole 7. Eine quer zur Längsachse der Deichsel 1 verlaufende Drehachse 22 der Handbremshebel-Hilfsschwenkeinrichtung 26 durchdringt eine Bohrung der Haltekonsole 7 und ragt mit ihrem freien Ende in das Innere der Haltekonsole 7 hinein. An diesem freien Ende ist, wie aus Figur 4A ersichtlich, das Nockenelement 19 drehfest befestigt, das somit innerhalb der Haltekonsole 7 angeordnet ist. Die Drehachse 22 befindet sich dabei, wie insbesondere aus den Figuren 3A und 3B ersichtlich, nahe oberhalb der unteren Querlasche 23 des Handbremshebels 2 und besitzt eine derartige Länge, dass das Nockenelement 19 die Querlasche 23 übergreift.

Das Nockenelement 19 weist eine exzentrische oder evolventenartige Außenumfangsfläche 24 auf. In der in den Figuren 2, 3A und 3B gezeigten Drehstellung befindet sich die Querlasche 23 des Handbremshebels 2 unterhalb der Drehachse 22 und ist mit demjenigen Teil der Außenumfangsfläche 24 des Nockenelements 19 in Kontakt, der zur Drehachse 22 den minimalen Abstand hat. In dieser Stellung befindet sich der Handbremshebel 2 in seiner Lösestellung. Wird das Nockenelement 19 vom Elektromotor 21, ausgehend von der in Figur 3B gezeigten Drehstellung, im Uhrzeigersinn gedreht, kommen Abschnitte der Außenumfangsfläche 24 mit der Querlasche 23 in Eingriff, die von der Drehachse 22 einen zunehmend größeren Abstand haben. Die Querlasche 23 wird dadurch zunehmend nach unten und nach vorn, d.h. in Figur 3B nach links, geschwenkt, wodurch der Handbremshebel 2 um seine Schwenkachse 10 bis zu seiner Totpunktstellung und geringfügig darüber hinaus bis in eine Position geschwenkt wird, ab der die Kraftlinie 16 der Federspeichereinrichtung 13 unterhalb der Schwenkachse 10 liegt und das weitere Überführen des Handbremshebels 2 in seine Bremsstellung durch die Federspeichereinrichtung 13 übernommen werden kann.

Die Handbremshebel-Hilfsschwenkeinrichtung 26 muss somit nur die Schwenkbewegung des Handbremshebels 2 über denjenigen Schwenkbereich übernehmen, der zwischen der Lösestellung und der Totpunktstellung des Handbremshebels 2 liegt. Hierbei greift die Handbremshebel-Hilfsschwenkeinrichtung 26 nur in einer kritischen Situation ein, die beispielsweise dann auftreten kann, wenn das Energieniveau des Energiespeichers des Fahrzeuganhängers unter einen vorbestimmten Wert abfällt. Aufgrund der evolventenartigen Außenumfangsfläche 24 des Nockenelementes 19 ist es möglich, mittels einer vollen 360° Umdrehung die Querlasche 23 lediglich um ein relativ kleines Stück nach vorne zu schwenken, d. h. es wird eine große Untersetzung erreicht. Hierdurch muss der Elektromotor 21 nur sehr wenig Kraft aufbringen und es sind kleine und kostengünstige Elektromotoren ausreichend, welche mit sehr wenig Restenergie auskommen.

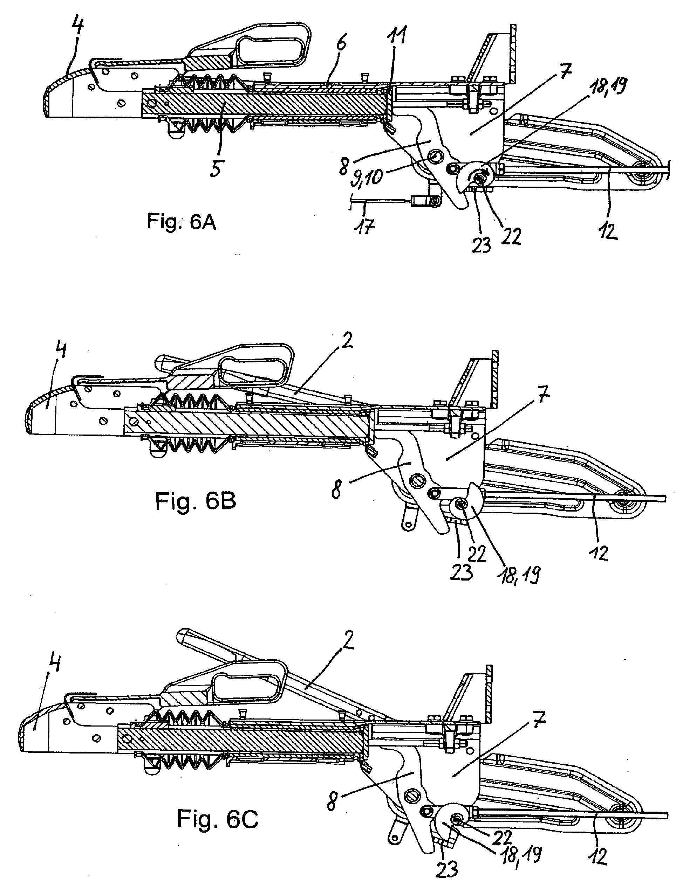

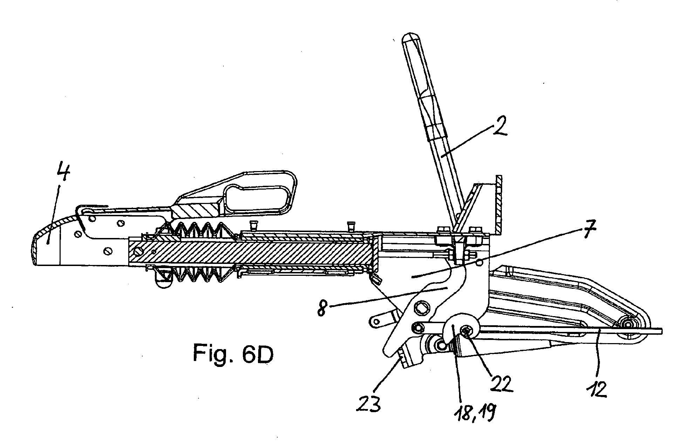

Fig. 6A bis Fig. 6D sind jeweilige Ansichten des in Fig. 1 dargestellten vorderen Teils einer Deichsel 1 während einer 360°-Umdrehung des Nockenelements 19. In Fig. 6A ist die Ausgangssituation dargestellt, in welcher sich die Feststellbremse 3 in einem gelösten Zustand befindet und das Nockenelement 19 sich ebenfalls in seiner Ausgangsstellung befindet. In Fig. 6B wurde das Nockenelement 19 von dem hier nicht sichtbaren Elektromotor 21 um ca. 150° um seine Drehachse 22 herum gedreht. Der Handbremshebel 2 befindet sich in der Totpunktstellung, die Feststellbremse 3 ist weiterhin in einem gelösten Zustand. In Fig. 6C ist die Maximalstellung des Nockenelementes 19 erreicht und der Handbremshebel 2 bereits über den Totpunkt hinaus, d. h. in eine Übertotpunktstellung geschwenkt. Hier spannt sich die Feststellbremse 3, wie oben bereits beschrieben, mittels der Federspeichereinrichtung 13 selbstständig zu. In der in Fig. 6D dargestellten Situation hat sich die Feststellbremse 3 selbsttätig zugespannt und das Nockenelement 19 befindet sich nach Umdrehung um 360° wieder in seiner Ausgangsstellung.

### Bezugszeichenliste

- 1: Deichsel
- 2: Handbremshebel
- 3: Feststellbremse
- 4: Kugelkopfkalotte
- 5: Kupplungsstange
- 6: Deichselrohr
- 7: Haltekonsole
- 8: Schwenkhebel (Kraftübertragungselement)
- 9: Schwenklager
- 10: Schwenkachse
- 11: Druckplatte
- 12: Bremsgestänge
- 13: Federspeichereinrichtung
- 14: Schwenklager
- 15: vorderes Schwenklager
- 16: Kraftlinie
- 17: Abreißseil
- 18: Betätigungselement
- 19: Nockenelement
- 20: unteres Ende des Schwenkhebels
- 21: Elektromotor
- 22: Drehachse
- 23: Querlasche
- 24: Außenumfangsfläche
- 25: Untersetzungsgetriebe
- 26: Handbremshebel-Hilfsschwenkeinrichtung
- 27: Flansch

## Patentansprüche

1. Feststellbremse für Fahrzeuganhänger, umfassend:
- einen Handbremshebel (2), der am Fahrzeuganhänger schwenkbar lagerbar und um eine Schwenkachse (10) schwenkbar ist,
- eine Federspeichereinrichtung (13), welche ausgebildet ist, den Handbremshebel (2) ab einer Totpunktstellung, in der die Kraftrichtung der Federspeichereinrichtung (13) durch die Schwenkachse (10) des Handbremshebels (2) geht, entweder in eine Löseposition oder entgegengesetzt in eine Bremsposition zu schwenken,
**dadurch gekennzeichnet, dass** die Feststellbremse als elektromechanische Feststellbremse ausgebildet ist, die einen Elektromotor (21) umfasst, der über ein Betätigungselement (18) mit dem Handbremshebel (2) in Wirkverbindung ist, derart, dass der Handbremshebel (2) mittels des Elektromotors (21) von einer Löseposition über die Totpunktstellung hinaus lediglich bis in eine Schwenkposition schwenkbar ist, ab welcher die Federspeichereinrichtung (13) den Handbremshebel (2) weiter in seine Bremsposition drängt, während ab dieser Schwenkposition die weitere Bewegung des Handbremshebels (2) in seine Bremsposition unabhängig vom Elektromotor (21) durch die Federspeichereinrichtung (13) erfolgt.

2. Feststellbremse nach Anspruch 1, **dadurch gekennzeichnet, dass** das mit dem Elektromotor (21) zusammenwirkende Betätigungselement (18) in Nachbarschaft einer am unteren Ende des Handbremshebels (2) angeordneten Querlasche (23) des Handbremshebels (2) angeordnet und mit dieser in Eingriff ist oder in Eingriff bringbar ist.

3. Feststellbremse nach Anspruch 1 oder 2, **dadurch gekennzeichnet, dass** der Elektromotor (21) über ein Untersetzungsgetriebe (25) mit dem Betätigungselement (18) in Wirkverbindung ist.

4. Feststellbremse nach einem der vorhergehenden Ansprüche, **dadurch gekennzeichnet, dass** das Betätigungselement (18) ein Nockenelement (19) mit einer exzentrisch oder evolventenartig ausgebildeten Außenumfangsfläche (24) ist.

5. Feststellbremse nach Anspruch 4, **dadurch gekennzeichnet, dass** das Nockenelement (19) mittels des Elektromotors (21) um 360° drehbar und derart ausgebildet ist, dass eine 360°-Drehung des Nockenelementes (19) die Schwenkbewegung des Handbremshebels (2) von seiner Löseposition über die Totpunktstellung hinaus in die Schwenkposition bewirkt, in welcher die Federspeichereinrichtung (13) den Handbremshebel (2) weiter in seine Bremsposition drängt.

6. Feststellbremse nach einem der vorhergehenden Ansprüche, **dadurch gekennzeichnet, dass** die Feststellbremse bei Detektion eines vorbestimmten Zustands eines Energiespeichers, insbesondere Akkumulators, mittels des Elektromotors (21) betätigbar ist.

## Claims

1. Parking brake for vehicle trailers, comprising:
- a hand brake lever (2) that can be pivotally mounted on the vehicle trailer and is pivotable about a pivot axis (10),
- a spring accumulator device (13) designed to pivot the hand brake lever (2) either into a released position or in the opposite direction into a braking position beyond a dead centre position, in which the direction of force of the spring accumulator device (13) extends through the pivot axis (10) of the hand brake lever (2),
**characterised in that**
the parking brake is designed as an electromechanical parking brake that comprises an electric motor (21) operatively connected to the hand brake lever (2) by means of an actuation element (18) in such a way that the hand brake lever (2) can be pivoted by means of the electric motor (21) from a released position, beyond the dead centre position, only as far as to a pivot position beyond which the spring accumulator device (13) urges the hand brake lever (2) further into its braking position, whereas beyond this pivot position the hand brake lever (2) is moved further into its braking position by the spring accumulator device (13) independently of the electric motor (21).

2. Parking brake according to claim 1, **characterised in that** the actuation element (18) interacting with the electric motor (21) is arranged adjacently to a transverse tab (23) of the hand brake lever (2), which tab is arranged at the lower end of the hand brake lever (2), and said element is or can be engaged with said tab.

3. Parking brake according to either claim 1 or claim 2, **characterised in that** the electric motor (21) is operatively connected to the actuation element (18) by means of a reduction gear (25).

4. Parking brake according to any of the preceding claims, **characterised in that** the actuation element (18) is a cam element (19) having an eccentric or involute-like outer peripheral surface (24).

5. Parking brake according to claim 4, **characterised in that** the cam element (19) can be rotated 360° by means of the electric motor (21) and is designed such that a 360° rotation of the cam element (19) causes the hand brake lever (2) to pivot from its released position beyond the dead centre position into the pivot position, in which the spring accumulator device (13) urges the hand brake lever (2) further into its braking position.

6. Parking brake according to any of the preceding claims, **characterised in that** the parking brake can be actuated by means of the electric motor (21) when a predetermined state of an energy store, in particular an accumulator, is detected.

## Revendications

1. Frein de stationnement pour remorque de véhicule, comportant :
- un levier de freinage manuel (2) qui est monté avec faculté de pivotement sur la remorque et qui est capable de pivoter autour d'un axe de pivotement (10),
- un dispositif accumulateur à ressort (13) qui est conçu pour pivoter le levier de freinage manuel (2) à partir d'une position de point mort dans laquelle la direction de l'effort du dispositif accumulateur (13) passe par l'axe de pivotement (10) du levier de freinage manuel (2), soit jusque dans une position de desserrage soit inversement jusque dans une position de freinage,
**caractérisé en ce que**
le frein de stationnement est réalisé sous forme de frein de stationnement électromécanique qui comprend un moteur électrique (21) qui est en liaison d'action avec le levier de freinage manuel (2) via un élément d'actionnement (18), de telle sorte qu'au moyen du moteur électrique (21), le levier de freinage manuel (2) est capable de pivoter depuis une position de desserrage au-delà de la position de point mort uniquement jusque dans une position de pivotement à partir de laquelle le dispositif accumulateur à ressort (13) pousse le levier de freinage manuel (2) plus loin dans sa position de freinage, tandis qu'à partir de cette position de pivotement la poursuite du mouvement du levier de freinage manuel (2) vers sa position de freinage s'effectue indépendamment du moteur électrique (21) par le dispositif accumulateur à ressort (13).

2. Frein de stationnement selon la revendication 1, **caractérisé en ce que** l'élément d'actionnement (18) coopérant avec le moteur électrique (21) est agencé au voisinage d'une patte transversale (23) du levier de freinage manuel (2) disposée à l'extrémité inférieure du levier de freinage manuel (2), et est en engagement ou susceptible de venir en engagement avec celle-ci.

3. Frein de stationnement selon la revendication 1 ou 2, **caractérisé en ce que** le moteur électrique (21) est en liaison d'action avec l'élément d'actionnement (18) via un mécanisme de démultiplication (25).

4. Frein de stationnement selon l'une des revendications précédentes, **caractérisé en ce que** l'élément d'actionnement (18) est un élément à came (19) pourvu d'une surface périphérique extérieure (24) réalisée de façon excentrique ou en forme de développante.

5. Frein de stationnement selon la revendication 4, **caractérisé en ce que** l'élément à came (19) est susceptible de tourner de 360° au moyen du moteur électrique (21) et est réalisé de telle sorte qu'une rotation de 360° de l'élément à came (19) provoque le mouvement de pivotement du levier de freinage manuel (2) depuis sa position de desserrage au-delà de la position de point mort jusque dans la position de pivotement dans laquelle le dispositif accumulateur à ressort (13) pousse le levier de freinage manuel (2) plus loin s sa position de freinage.

6. Frein de stationnement selon l'une des revendications précédentes, **caractérisé en ce que** lors de la détection d'un état prédéterminé d'un dispositif d'accumulation d'énergie, en particulier d'un accumulateur, le frein de stationnement est susceptible d'être actionné au moyen du moteur électrique (21).
